# EUROPEAN PATENT APPLICATION

(11) **EP 2 196 326 A1**
(43) Date of publication of application: **16.06.2010**
(21) Application number: 09177567.6
(22) Date of filing: 01.12.2009
(51) Int. Cl.: B60C 1/00, C08C 19/44, C08L 9/06, C08L 21/00

(54) **Polymers, rubber compositions, and tires**

(30) Priority: 12.12.2008 US 333361
(71) Applicant: The Goodyear Tire & Rubber Company, Akron, OH 44316-0001 (US)
(72) Inventor: Wong, Tang Hong, Hudson, OH 44236 (US); Rachita, Michael Joseph, North Canton, OH 44720 (US)
(74) Representative: Kutsch, Bernd

(57) **Abstract**

The present invention relates to polymers, rubber compositions, and tires. The polymers comprise repeat units provided from at least one amine monomer. The amine monomer can be an amine styrene monomer. Examples of amine styrenes monomer are provided. The polymer can be made from the copolymerization of at least one amine monomer and at least one monomer that is used to make synthetic rubber, such as at least one conjugated diolefin monomer. These polymers can be terminated with a terminating group, including, for example, those having a hydrolyzable group. Rubber compositions can be made from the above-described polymers. Tires can be made from the polymers or from the rubber compositions.

## Description

### Background

The present invention relates to polymers, rubber compositions, and tires made therefrom.

US-A- 5,066,721 discloses a rubber composition containing a rubbery polymer modified with a silane compound. The rubbery polymer modified with the silane compound is obtained by reacting an active terminal of a living polymer, which is obtained by polymerizing a monomer in the presence of an organic alkali metal catalyst, with a silane compound which is contained in an amount of not less than 10% by weight as a rubber ingredient, and silica is contained in an amount of 5∼200 parts by weight based on 100 parts by weight of the rubbery polymer modified with a silane compound.

US-B- 6,627,721 and US-B- 6,812,307 disclose polymers (and compounds and tires made therefrom) comprising at least one conjugated diolefin monomer and at least one functionalized monomer.

### Summary

The invention is directed to a polymer according to claim 1, a method according to claim 9, a rubber composition according to claim 13 and a tire according to claim 15.

Dependent claims refer to preferred embodiments of the invention.

In accordance with one embodiment of the present invention is a polymer comprising (a) a terminating compound that provides a terminating group on the polymer, wherein the terminating compound is selected from

XₙSi(OR)ₘR'₄₋ₘ₋ₙ

wherein X can be a chlorine atom, a bromine atom or an iodine atom, R is an alkyl group with from 1 carbon to 7 carbons, R' is a alkyl group with from 1 carbon to 20 carbons, an aryl group, a vinyl group or a halogenated alkyl group, m is an integer from 1 to 4, n is an integer from 0 to 2, and a sum of n and m is from 1 to 4; and (b) repeat units comprising (1) a repeat unit provided from a conjugated diolefin monomer, and (2) a repeat unit provided from an amine monomer. The amine monomer can be an amine styrene monomer. The terminating group can be hydrolyzable. The polymer can be isolated, purified or recovered using steam stripping.

Other aspects of the invention provide for a method for preparing a polymer comprising (1) polymerizing monomers, (2) reacting the polymerized monomers with a terminating compound and (3) recovering the polymer.

The present invention also includes rubber compositions and tires made from these polymers.

### Detailed description

The present invention relates to polymers and rubber compositions, and tires made therefrom. "Repeat units" and "monomers" are terms used to describe the makeup of polymers. A repeat unit differs from a monomer in that the repeat unit is part of the polymer whereas the monomer, which is not part of the polymer, can become a repeat unit upon being incorporated into the polymer. In some instances, a double bond of the monomer is consumed by a polymerization reaction to provide the corresponding repeat unit.

The polymers can comprise repeat units provided from at least one amine monomer. In other embodiments, a polymer can be made from the copolymerization of at least one amine monomer and at least one monomer that is used to make synthetic rubber, such as a conjugated diolefin monomer. These polymers can be terminated with at least one terminating group, including, for example, those having a hydrolyzable group.

The terminating compounds that can provide the terminating groups on the polymer, can include any number of terminating compounds, including, but not limited to, those selected from the terminating compounds of formula I

XₙSi(OR)ₘR'₄₋ₘ₋ₙ (I).

X can be a halogen atom selected from a chlorine atom, a bromine atom and an iodine atom. R can be an alkyl group with from 1 to 7 carbons (e.g., 1, 2, 3, 4, 5, 6, or 7 carbons). R' is a alkyl group with from 1 to 20 carbons, an aryl group, a vinyl group or a halogenated alkyl group, m is an integer of 1, 2, 3, or 4, n is an integer of 0, 1, or 2, and the sum of n and m is 1, 2, 3, or 4. In some embodiments, one or more -OR group(s) are hydrolysable, by for example some steam stripping procedures (such as those disclosed in US-A- 5,066,721). An example of a terminating compound is TEOS (i.e., Si(OCH₂CH₃)₄).

The terminating compound can be synthesized according to any number of techniques, including, for example, those disclosed in US-A- 5,066,721, which is herein incorporated by reference in its entirety.

In some embodiments, the amine monomer is an amine styrene monomer. The amine styrene monomer is a styrene monomer substituted with at least one amine-comprising moiety and which can also be optionally substituted with one or more non-amine moieties. Embodiments of the amine styrene monomer include those described in (a)-(g) below. 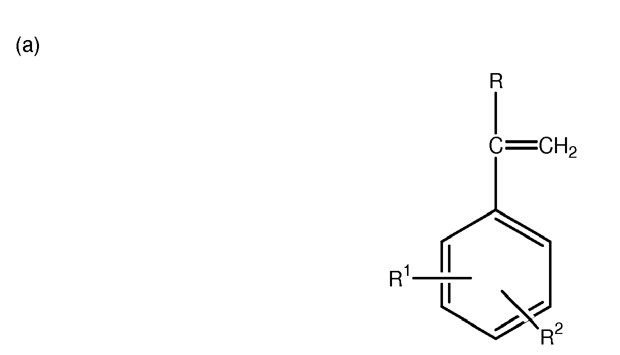 wherein R can be an alkyl group with from 1 carbon atom to 10 carbon atoms or a hydrogen atom. In some embodiments, R is a hydrogen or a methyl group. R¹ and R² can be the same or different and can be hydrogen atoms or an amine functional group. In some embodiments, R¹ and R² are not both hydrogen atoms. In some embodiments, R¹ and R² can be a moiety selected from the formula 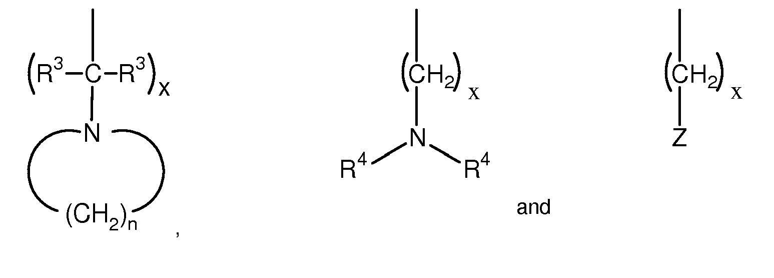 wherein the R³ groups within a repeat unit and in different repeat units can be the same or different and are hydrogen atoms or alkyl groups with from 1 carbon atom to 4 carbon atoms. In some embodiments, n can be from 1 to 10 and x can be from 1 to 10.

R⁴can be the same or different and can be selected from the group consisting of alkyl groups containing from 1 to 10 carbon atoms, aryl groups, allyl groups, and alklyoxy groups having the structural formula -(CH₂)_{y}-O-(CH₂)_{z}-CH₃, wherein y is an integer from 1 to 10, wherein z is an integer from 1 to 10. In some embodiment, R⁴ can be alkyl groups with from 1 to 4 carbon atoms, aryl groups with from 6 to 18 carbon atoms, or allyl groups with from 3 to 18 carbon atoms;

Z can be a nitrogen-containing heterocyclic compound. In some embodiments, Z can be one of the following moieties: 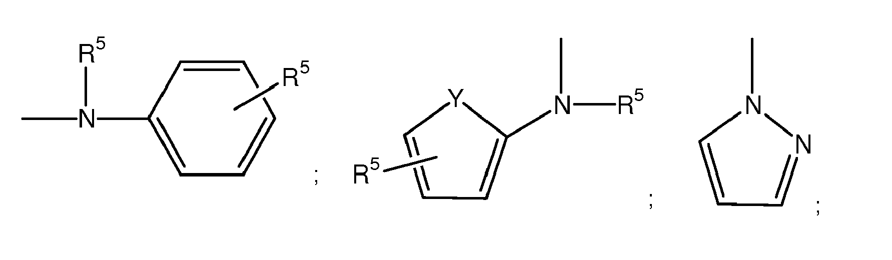 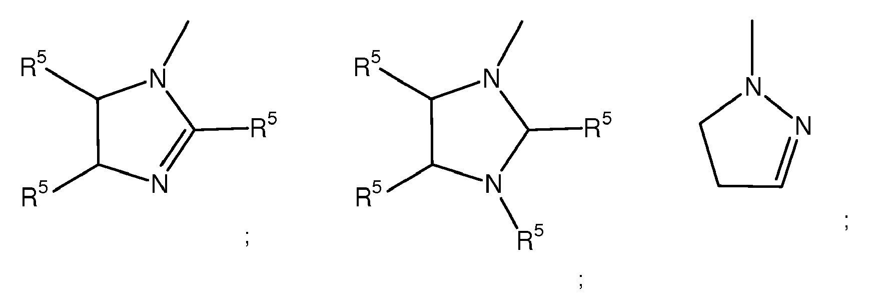 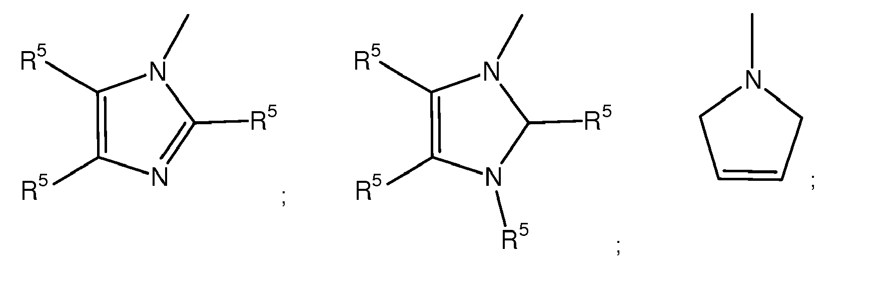 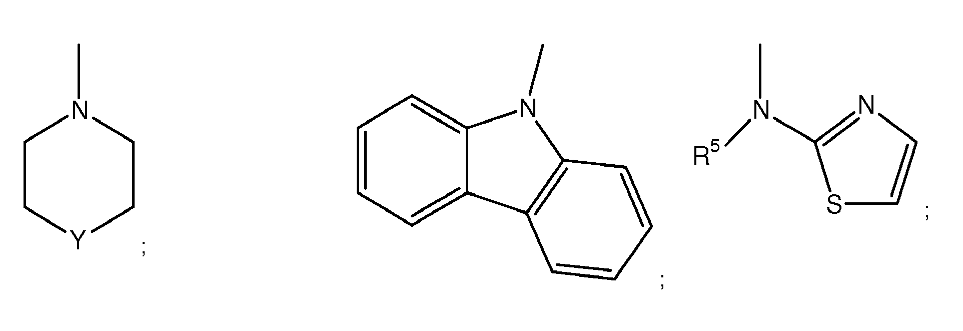 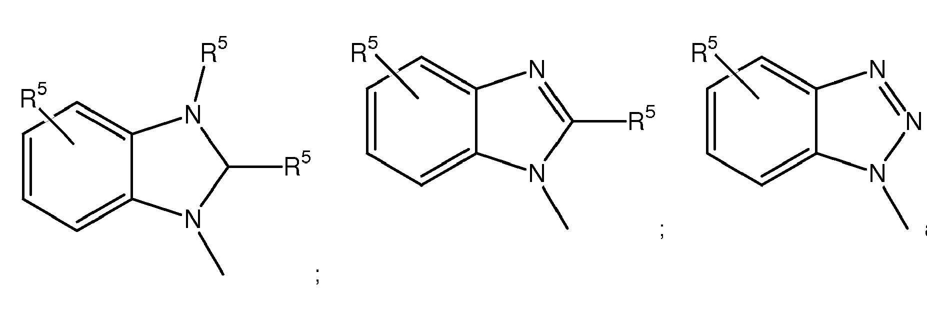 and

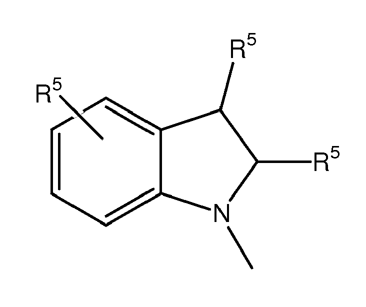

R⁵ groups can be the same or different and can be selected from the group consisting of alkyl groups with from 1 carbon atom to 10 carbon atoms, aryl groups, allyl groups, and alkoxy groups. Y can be oxygen, sulfur, or a methylene group.

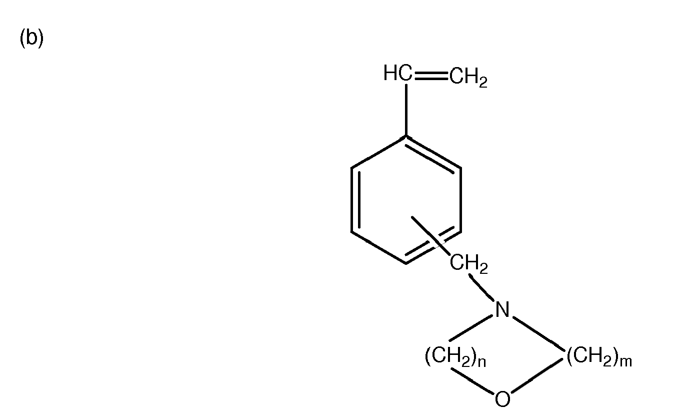

n can be an integer from 1 to 10 and m can be an integer from 1 to 10. In some embodiments, the sum of n and m is at least about 4.

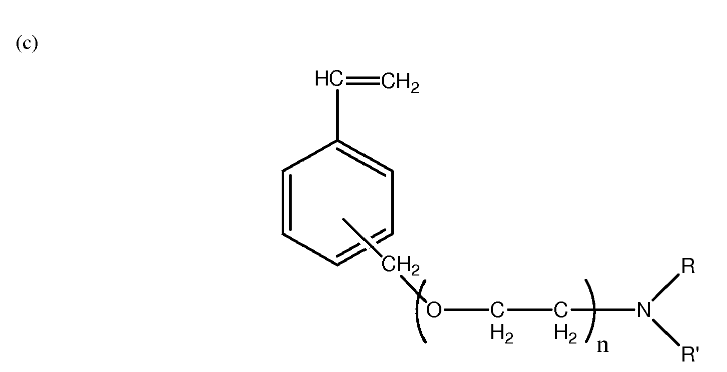

n can be an integer from 1 to 10, and R and R' can be the same or different and can be alkyl groups with from 1 carbon atom to 10 carbon atoms.

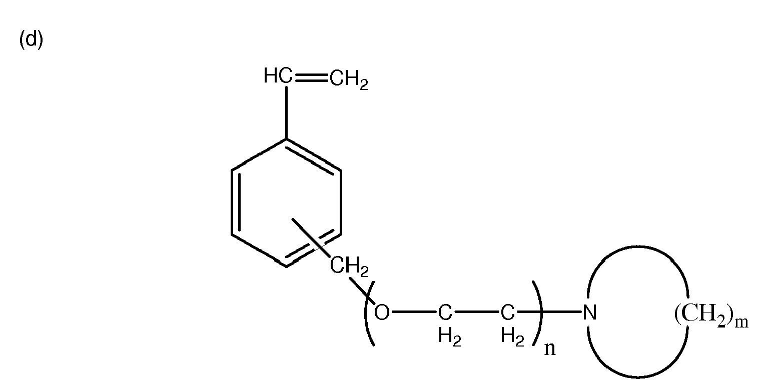

n can be an integer from 1 to 10 and m can be an integer from 4 to 10.

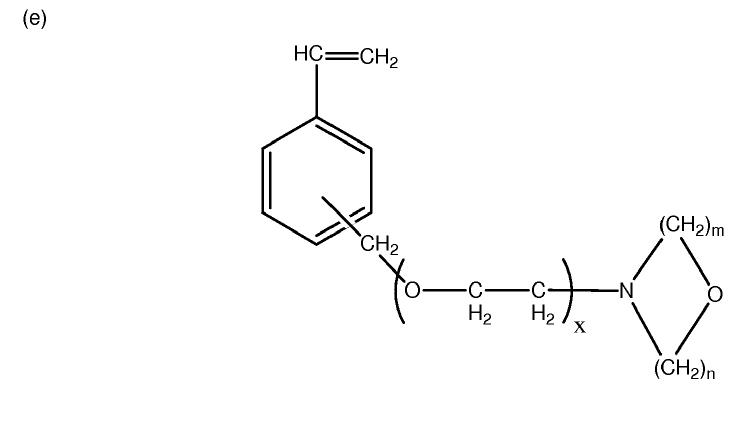

x can be an integer from 1 to 10, n can be an integer from 1 to 10 and m can be an integer from 1 to 10. In some embodiments, the sum of n and m is at least 4.

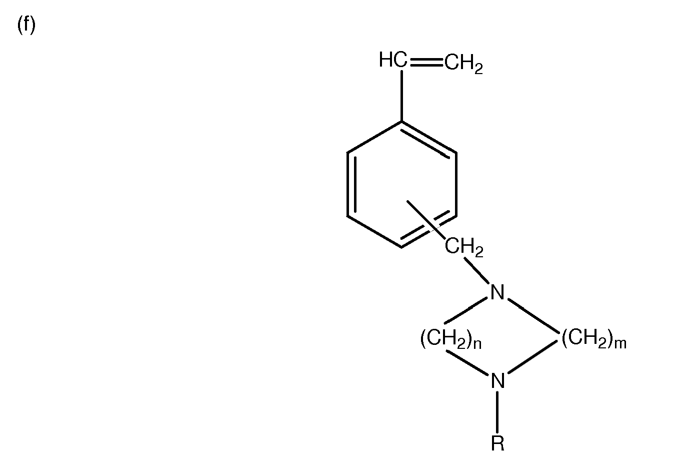

R can be a hydrogen atom or an alkyl group with from 1 carbon atom to 10 carbon atoms. n can be an integer from 1 to 10, and m can be an integer from 1 to 10. In some embodiments, the sum of n and m is at least 4.

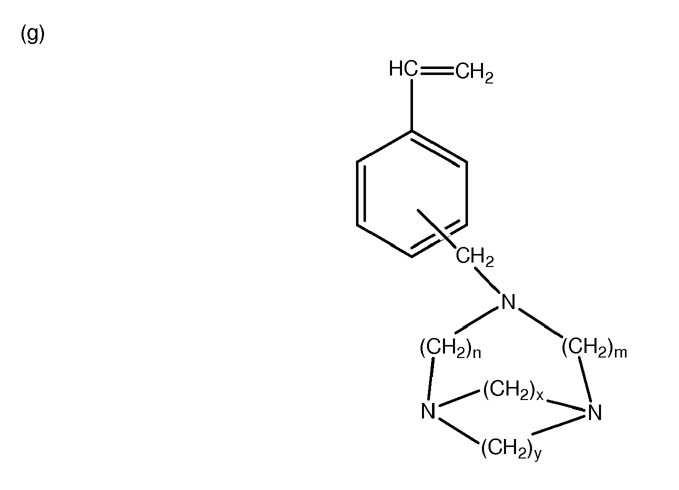

n can be an integer from 1 to 10, m can be an integer from 1 to 10, x can be an integer from 1 to 10, and y can be an integer from 1 to 10;

In some embodiments, the amine monomers are of the structural formula: 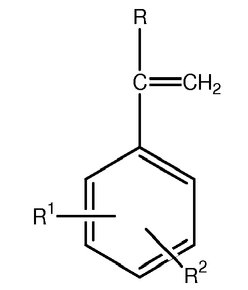 where R can be an alkyl group with from 1 carbon atom to 10 carbon atoms or a hydrogen atom. In some embodiments, R is a hydrogen or a methyl group. R¹ and R² can be the same or different and can be hydrogen atoms or a functional group. In some embodiments, R¹ and R² are not both hydrogen atoms. In some embodiments, R¹ and R² can be a moiety selected from the formula: 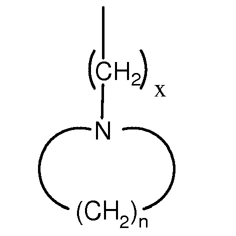 where n can be from 1 to 10 and x can be from 1 to 10.

In some embodiments, the amine monomers have the following structural formulas:

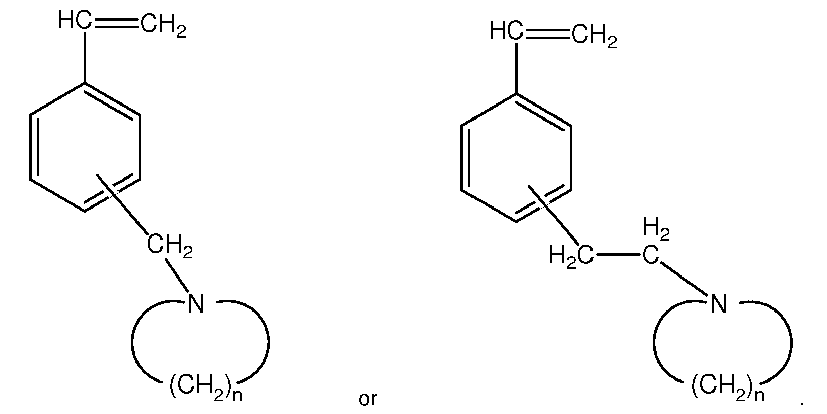

n is an integer from 4 to 10. For example, n can be 4 or 6.

In some embodiments, the amine monomer is selected from

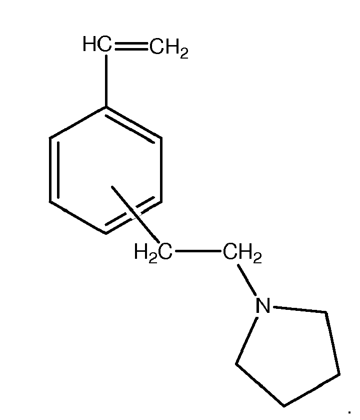

In some embodiments, the amine monomer can be synthesized by reacting a secondary amine with vinyl aromatic halide, such as vinyl benzyl chloride, in the presence of a base to produce the amine styrene monomer. This procedure can be depicted as follows:

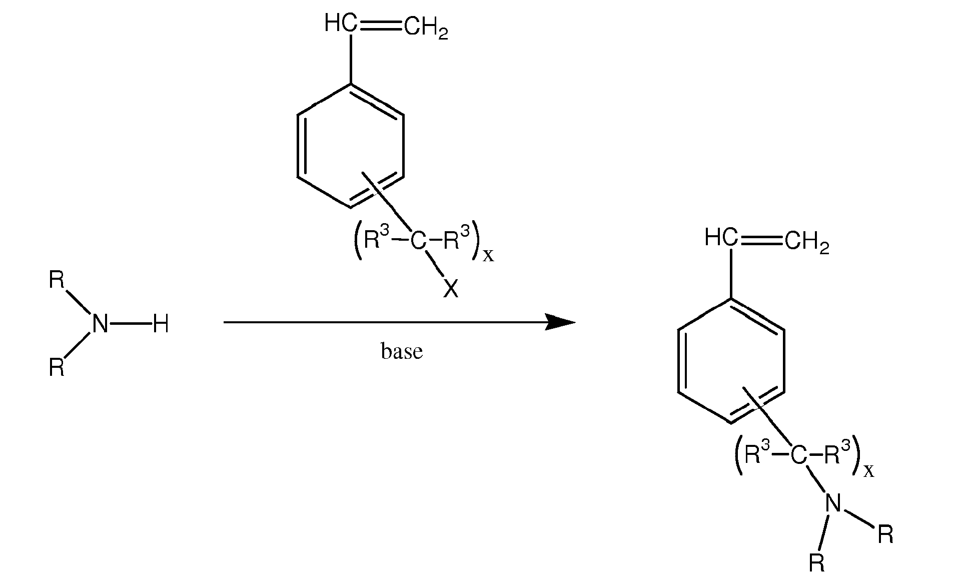

x can be an integer from 1 to 10 and X can be a halogen atom.

In some embodiments, this reaction can be conducted at a temperature that is at least -20° C, at least -10° C, at least 0°C, no more than 25° C, no more than 30° C, or no more than 40° C.
The base can be an organic base or an inorganic base. Examples of organic bases include aromatic and aliphatic amines, triethylamine, aniline, and pyridine. Examples of inorganic bases include the salts of weak mineral acids such as sodium carbonate, calcium carbonate, sodium hydroxide, calcium hydroxide, and aluminum hydroxide. In some embodiments, after the reaction has been completed, volatile compounds can be removed under reduced pressure yielding the product as a viscous residue.

In some embodiments, amine monomers that contain cyclic amines can also be made by the same reaction scheme wherein a cyclic secondary amine is employed in the first step of the reaction.
This reaction scheme can be depicted as follows:

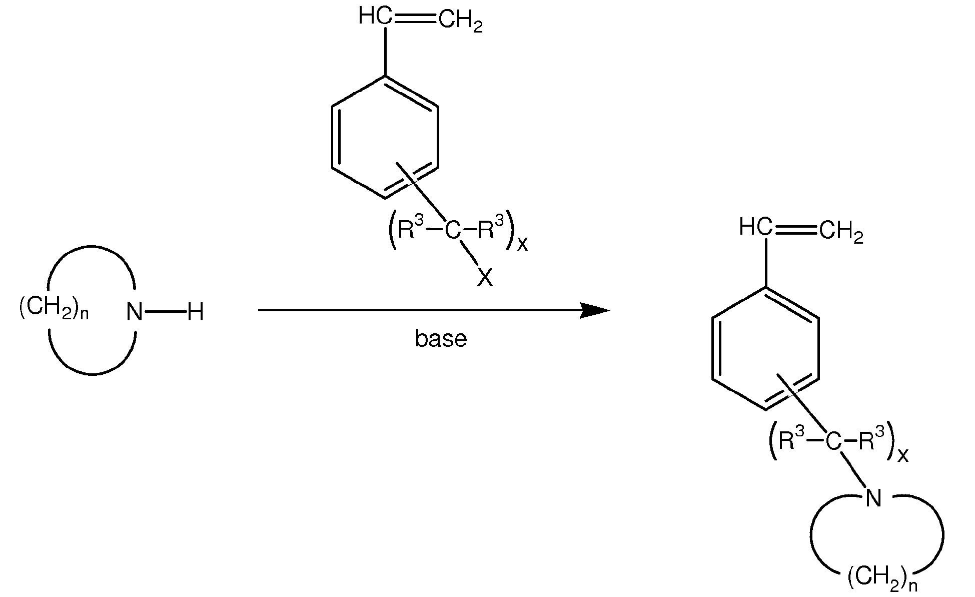

x can be an integer from 1 to 10, n can be an integer from 4 to 10, and X can be a halogen atom.

The amine monomers can be copolymerized with virtually any monomer used to make synthetic rubber, including but not limited to dienes, such as conjugated diolefin monomers and hexadienes. In some instances the amine monomer can be copolymerized with at least one conjugated diolefin monomer, such as 1,3-butadiene or isoprene. Other monomers that are copolymerizable with conjugated diolefin monomers, such as vinyl aromatic monomers, can also be used.

In some embodiments, inventive polymers can be made by polymerizing a mixture of amine monomers and conjugated diolefin monomers with one or more ethylenically unsaturated monomers, such as vinyl aromatic monomers. The conjugated diolefin monomers which can be utilized in the synthesis of inventive polymers that can be coupled in accordance with this invention can contain from at least 4 carbons, no more than 8 carbons, or no more than 12 carbon. In some embodiments, 1,3-butadiene, isoprene, 2,3-dimethyl-1,3-butadiene, piperylene, 3-butyl-1,3-octadiene, 2-phenyl-1,3-butadiene, or mixtures thereof are utilized as conjugated diolefin monomers.

In some embodiments, the inventive polymer can be copolymerized with one or more diene monomers or with one or more other ethylenically unsaturated monomers and can contain at least 50 weight percent dienes (e.g., conjugated diolefin monomers), no more than 99 weight percent dienes (e.g., conjugated diolefin monomers), at least 1 weight percent of the other ethylenically unsaturated monomers, or no more than 50 weight percent of the other ethylenically unsaturated monomers. For example, copolymers of the amine monomers with conjugated diolefin monomers and vinylaromatic monomers, such as styrene-butadiene rubbers that contain from 50 to 95 weight percent conjugated diolefin monomers and from 5 to 50 weight percent vinylaromatic monomers, can be useful in some embodiments.

Ethylenically unsaturated monomers, including vinyl aromatic monomers can be selected so as to be copolymerizable with the conjugated diolefin monomers being utilized. In some embodiments, any vinyl aromatic monomer that is known to polymerize with organolithium initiators can be used. Such vinyl aromatic monomers can contain at least 8 carbons, no more than 14 carbons or no more than 20 carbon atoms. Some examples of vinyl aromatic monomers that can be utilized include styrene, 1-vinylnaphthalene, 2-vinylnaphthalene, α-methylstyrene, 4-phenylstyrene and 3-methylstyrene.

In some embodiments, at least 0.1 phm (parts by weight by 100 parts by weight of monomers), or no more than 99 phm of the amine monomer can be included in the polymerization. In some embodiments the amine monomer can be included in the inventive polymer at the following concentrations: at least 0.1 phm, at least 0.3 phm, at least 50 phm, at least 10 phm, no more than 2 phm, no more than 1 phm, no more than 0.7 phm or ranges from the combinations thereof.

In some embodiments, vinyl aromatic monomers, such as styrene or α-methyl styrene, can be copolymerized into the inventive polymer at a concentration of at least 1 phm or no more than 50 phm. Vinyl aromatic monomers can be incorporated into the inventive polymer at levels including at least about 10 phm, at least 15 phm, no more than 40 phm, no more than 30 phm, or ranges from the combinations thereof. For instance, the inventive polymer can comprise repeat units (i.e., monomers incorporated into the polymer) that are (a) from at least 58 weight percent 1,3-butadiene or from no more than 90 weight percent 1,3-butadiene, (b) from at least 8 weight percent styrene or from no more than 40 weight percent styrene, and (c) from at least 0.1 phm of the amine monomer or from no more than 2 phm of the amine monomer. In some embodiments, a inventive polymer can comprise repeat units that are (a) from at least 69 weight percent 1,3-butadiene or from no more than 85 weight percent 1,3-butadiene, (b) from at least 14 weight percent styrene or from no more than 30 weight percent styrene, and (c) from at least 0.2 phm of the amine monomer or from no more than 0.7 phm of the amine monomer.

Polymerization and recovery of polymer can be carried out according to various methods suitable for diene monomer polymerization processes. For example, this includes batchwise, semi-continuous, or continuous operations. In some instances, polymerization or recovery conditions can exclude air and other atmospheric impurities, such as oxygen or moisture. The polymerization of the amine monomers can be carried out in a number of different polymerization reactor systems, including bulk polymerization, vapor phase polymerization, solution polymerization, suspension polymerization, and precipitation polymerization systems.

In some embodiments, the polymerization reaction can use an initiation system comprising an initiator such as an anionic initiator. The initiation system can depend upon the particular monomers being polymerized and the desired characteristics of the inventive polymer being synthesized. In solution polymerizations, embodiments of initiation systems include anionic initiators such as alkyl lithium compounds.

In some embodiments, the reaction temperature can be at least 0° C, at least 20° C, or at least 60° C. In other embodiments, the reaction temperature can be no more than 150°C, no more than 120°C, or no more than 100°C. The reaction pressure can be sufficiently high to maintain liquid-phase reaction conditions; it can be autogenic pressure, which can vary depending upon the components of the reaction mixture and the temperature, or it can be higher, e.g., up to 1000 psi.

In batch operations, the polymerization time of amine monomers can be varied as desired; it can be, for example, at least one minute or no more than several days. Polymerization in batch processes can be terminated when monomer is no longer incorporated, or earlier, if desired. In some embodiments, termination in batch processes can occur when the reaction mixture becomes too viscous. In continuous operations, the polymerization mixture can be passed through a reactor of any suitable design. In some embodiments of polymerization reactions in continuous operations, the residence times can be varied. In some instances, the residence times can depend on the type of reactor system. Some examples of residence time include at least 10 minutes, to at least 15 minutes, to no more than 24, or 24 or at least 24 or more hours.

In some embodiments, the concentration of monomer in the reaction mixture may depend on the conditions employed. The concentration of monomer in the reaction mixture can include at least about 5 percent by weight of the reaction mixture, at least 20 percent by weight, or no more than 80 percent by weight.

The polymerization reactions according to this invention can be carried out in a suitable solvent that can be liquid under the conditions of reaction and can be relatively inert. The solvent can have the same number of carbon atoms per molecule as the diene reactant. The solvent can be in a different boiling range compared to that of the diene reactant. Solvents can include saturated hydrocarbons such as alkanes (e.g., hexane), cycloalkanes (e.g., cyclohexane or methylcyclohexane), and mixtures thereof. In some embodiments, solvents can include aromatic hydrocarbons (e.g., benzene, toluene, isopropylbenzene, or xylene), halogenated aromatic compounds (e.g.. chlorobenzene, bromobenzene, or orthodichlorobenzen), tetrahydrofuran or dioxane. A mixture of any of the aforementioned solvents can be used.

The polymerization can be carried out to maximize amine monomer conversion in order to maximize the incorporation of the polymerizable amine monomer. Incremental addition or a chain transfer agent can be used in some embodiments, and can also be used, as one of several methods, to avoid excessive gel formation. After the polymerization is complete, the polymer can be recovered from a slurry or solution of the polymer through steam stripping. Steam stripping is the reclamation of a polymer from a hydrocarbon solution by means of driving off the hydrocarbon with steam heated water, sometimes under neutral pH conditions.

In some embodiments, the amine monomers can be polymerized with one or more comonomers. Adjustments in the polymerization recipe or reaction conditions can be made to obtain a desired rate of polymer formation, and can depend on several factors including, for example, the amount of amine monomer included and the other monomers involved.

As discussed above, comonomers that can be used include dienes (e.g., conjugated diolefin monomers) and ethylenically unsaturated monomers and mixture thereof. Mixtures of different amine monomers and mixtures of different comonomers (e.g., conjugated diolyfin monomers or ethylenically unsaturated monomers, together or separately) can be used. The monomer charge ratio by weight of amine monomer to total non-amine comonomer can be at least 0.10/99.9, at least 5/95, at least 10/90, no more than 99.9/0.10, no more than 80/20, or no more than 40/60. In some embodiments, the monomer charge weight ratio of amine monomer to diene monomer to ethylenically unsaturated monomer can range from 5:75:20 to 95:5:0. In some instances, monomer charge weight ratios can depend on the amount of chemical functionality desired to be incorporated and on the reactivity ratios of the monomers in the particular polymerization system used.

The amine monomers can randomly copolymerize with conjugated diolefin monomers in solution polymerizations that are conducted at temperatures of 20° C or higher. In some embodiments, the amine monomers are incorporated into a inventive polymer that is capable of being made by solution polymerization with an anionic initiator. Polymerization employed in synthesizing the inventive polymers can be carried out in a hydrocarbon solvent including hydrocarbon solvents comprising one or more aromatic, paraffinic, or cycloparaffinic compounds. In some embodiments, these solvents can contain from 4 to 10 carbon atoms per molecule and can be liquid under the conditions of the polymerization. Suitable organic solvents include pentane, isooctane, cyclohexane, methylcyclohexane, isohexane, n-heptane; n-octane, n-hexane, benzene, toluene, xylene, ethylbenzene, diethylbenzene, isobutylbenzene, petroleum ether, kerosene, petroleum spirits, petroleum naphtha, and mixtures thereof.

In the solution polymerization, there can be at least 5 weight percent monomers in the polymerization medium or no more than 30 weight percent monomers in the polymerization medium. The polymerization media can comprise organic solvent and monomers. In some embodiments, the polymerization medium can contain at least 10 weight percent monomers, at least 15 weight percent monomers, no more than 25 weight percent monomers, or no more than 20 weight percent monomers.

The polymer may also be formed by random copolymerization of the amine monomer with a conjugated diolefin monomer or by the random terpolymerization of the amine monomer with a conjugated diolefin monomer and a vinyl aromatic monomer.

Some examples of polymers that can be functionalized with the amine monomers of this invention include polybutadiene, polyisoprene, styrene-butadiene rubber (SBR), α-methylstyrene-butadiene rubber, α-methylstyrene-isoprene rubber, styrene-isoprene-butadiene rubber (SIBR), styrene-isoprene rubber (SIR), isoprene-butadiene rubber (IBR), α-methylstyrene-isoprene-butadiene rubber and α-methylstyrene-styrene-isoprene-butadiene rubber. In cases where the polymer comprises repeat units that are derived from two or more monomers, the repeat units which are derived from the different monomers, including the amine monomers, can be distributed in a random manner.

In some embodiments, a polymer can be made by solution polymerization in a batch process or by using a continuous process by continuously charging at least one conjugated diolefin monomer, at least one amine monomer, and any additional monomers into a polymerization zone. The polymerization zone can be a polymerization reactor or a series of polymerization reactors. The polymerization zone can provide agitation to keep the monomers, polymer, initiator, and modifier well dispersed throughout the organic solvent the polymerization zone. Such continuous polymerizations can be conducted in a multiple reactor system. The polymer synthesized can be continuously withdrawn from the polymerization zone. The monomer conversion attained in the polymerization zone can be at least 85 percent or at least 90 percent.

The polymerization can be initiated with an anionic initiator, such as an alkyl lithium compound. The alkyl lithium compounds that can be used can include at least 1 carbon or no more than 8 carbon atoms, such as n-butyl lithium.

The amount of the lithium initiator utilized can vary with the monomers being polymerized and with the molecular weight that is desired for the polymer being synthesized. In some embodiments, the amount of lithium initiator used can be at least 0.01 phm (parts per 100 parts by weight of monomer), at least 0.025 phm, no more than 0.07 phm, no more than 0.1 phm, or no more than 1 phm.

The polymerization process of this invention can be conducted in the presence of polar modifiers including alkyltetrahydrofurfuryl ethers (e.g., methyltetrahydrofurfuryl ether, ethyltetrahydrofurfuryl ether, propyltetrahydrofurfuryl ether, butyltetrahydrodfurfuryl ether, hexyltetrahydrofurfuryl ether, octyltetrahydrofurfuryl ether, dodecyltetrahydrofurfuryl ether), diethyl ether, di-n-propyl ether, diisopropyl ether, di-n-butyl ether, tetrahydrofuran, dioxane, ethylene glycol dimethyl ether, ethylene glycol diethyl ether, diethylene glycol dimethyl ether, diethylene glycol diethyl ether, triethylene glycol dimethyl ether, trimethylamine, triethylamine, N,N,N',N'-tetramethylethylenediamine, N-methyl morpholine, N-ethyl morpholine, N-phenyl morpholine, or mixtures thereof.

The polar modifier can be employed at a concentration wherein the molar ratio of the polar modifier to the lithium initiator is at least 0.01:1, at least 0.25:1, at least 0.5:1, no more than 3:2, no more than 3:1, no more than 4:1, or no more than 5:1.

In some embodiments, the polymerization can be conducted utilizing an oligomeric oxolanyl alkane as the modifier. Such oligomeric oxolanyl alkanes can be of a structural formula selected from the group consisting of: 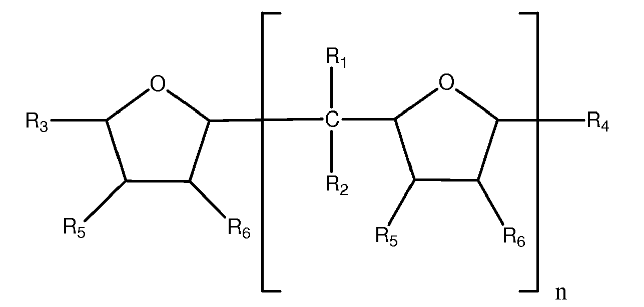 and 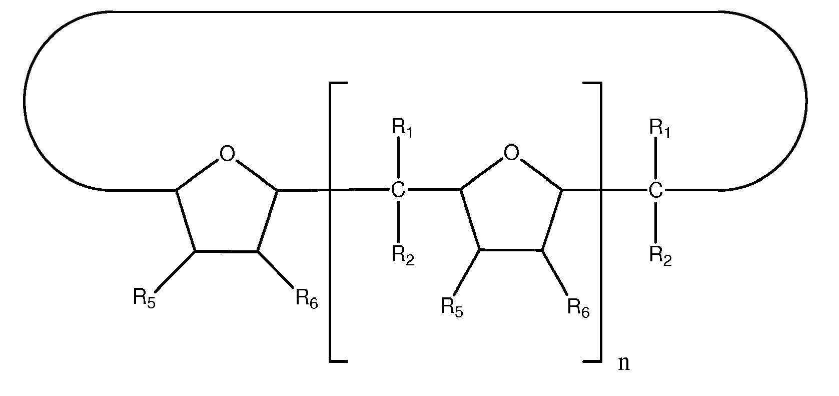 wherein n is an integer from 1 to 5, wherein m is an integer from 3 to 5, wherein R₁, R₂, R₃, R₄, R₅, and R₆ can be the same or different, and wherein R₁, R₂, R₃, R₄, R₅, and R₆ represent a member selected from the group consisting of a hydrogen atom and alkyl groups containing at least 1 carbon atom, no more than 4 carbon atoms, or no more than 8 carbon atoms.

The polymerization temperature can be at least 30° C, at least 45° C, at least 60° C, no more than 90°C, no more than 100° C, no more than 125° C, or nor more than 180°C. The pressure can be sufficient to maintain a liquid phase or a substantially liquid phase under the conditions of the polymerization reaction. In some instances, the pressure can be maintained such that the reactors operate above the vapor pressure of the reaction mixture.

The polymerization can be carried out until a certain amount of polymerization of the monomers. For example, the polymerization can be conducted for a length of time sufficient to permit substantially complete polymerization of monomers. In some embodiments, for example, polymerization can be carried out until at least 85% polymerization of monomers is attained, until at least 90% polymerization of the monomers is attained, or until at least 95% polymerization of the monomers is attained.

The terminating compound (e.g., formula (I)) can terminate the polymer by reacting the terminating compound to an active terminal of the living polymer. In some embodiments, the amount of the terminating compound used can at least 0.7 molecule per one active terminal of the living polymer, or from 0.7 to 5.0 molecule per one active terminal of the living polymer, or from 0.7to 2.0 molecule per one active terminal of the living polymer.

In some instances, a two-stage addition of the terminating compound can be used performed, wherein a small amount of the terminating compound terminating compound, other terminating agents, or a combination thereof is first added to an active terminal of the living polymer to form a polymer having a branched structure; the remaining active terminals can then be modified with a second addition of the terminating compound, other terminating agents, or a combination thereof. At least one stage should include a terminating compound or a mixture comprising it. One or more terminating compounds can be used in the in one or both stages. Additional stages (e.g., similar to those described) can be used, as desired.

The reaction (or any of the reaction stages) between an active terminal of the living polymer and the terminating compound can be performed by adding the terminating compound to the solution of polymerization system for the living polymer, or by adding the solution of the living polymer to a solution (e.g., an organic solution) comprising the terminating compound. The reaction temperature can be at least 30 ºC, no more than +150 ºC, or no more than +120 ºC. The reaction time can be at least 1 minute, at least 5 minutes, no more than 5 hours, or no more than 2 hours.

In combination with using the terminating compounds of formula (I), the polymerization can be partially terminated by the addition of an agent, such as an alcohol, a terminating agent, or a coupling agent. In some embodiments, termination of polymerization by any method can occur when a desired amount of polymerization of the monomers has occurred. In some embodiments, termination occurs at least partially (and sometimes solely) using at least one termination compound of formula (I).

Coupling agents include tin halides, silicon halides or mixtures thereof. The coupling agent can be continuously added in some instances, such as where asymmetrical coupling is desired. Continuous addition coupling agents can be done in a reaction zone separate from the zone where the bulk of the polymerization is occurring. In some embodiments, the coupling agents can be added in a separate reaction vessel after the desired degree of conversion has been attained. The coupling agents can be added in a hydrocarbon solution, e.g., in cyclohexane, to the polymerization admixture with suitable mixing for distribution and reaction. The coupling can be added only after a high degree of conversion has been attained. For instance, the coupling agent can be added after a monomer conversion of at least 85 percent has occurred or after a monomer conversion of at least 90 percent has occurred.

The tin halides used as coupling agents can be tin tetrahalides (e.g., tin tetrachloride, tin tetrabromide, tin tetrafluoride, or tin tetraiodide) or tin trihalides. Polymers coupled with tin trihalides having a maximum of three arms, whereas polymers coupled with tin tetrahalides have a maximum of four arms. In some embodiments, to induce a higher level of branching, tin tetrahalides can be used.

The silicon coupling agents can be silicon tetrahalides (e.g., silicon tetrachloride, silicon tetrabromide, silicon tetrafluoride, or silicon tetraiodide) or silicon trihalides. Polymers coupled with silicon trihalides having a maximum of three arms, whereas polymers coupled with silicon tetrahalides that have a maximum of four arms. In some embodiments, to induce a higher level of branching, silicon tetrahalides can be used

A combination of a tin halide and a silicon halide can be used to couple the polymer. By using such a combination of tin and silicon coupling agents improved properties for tire rubbers, such as lower hysteresis, can be attained. In some embodiments, a combination of tin and silicon coupling agents is used in tire tread compounds that contain both silica and carbon black. The molar ratio of the tin halide to the silicon halide employed in coupling the polymer can be at least 20:80, at least 40:60, at least 60:40, at least 65:35, no more than 80:20, no more than 85:15, no more than 90:10 or no more than 95:5.

In some embodiments, at least 0.01 milliequivalents of the coupling agent (e.g., tin halide, silicon halide, or mixture thereof) per 100 grams of the polymer is employed. In other embodiments, no more than 1.5 milliequivalents of the coupling agent per 100 grams of polymer or no more than 4.5 milliequivalents of the coupling agent per 100 grams of polymer is used. In some embodiments, the amount of coupling agent can be used to obtain the desired Mooney viscosity. In some instances, larger amount of coupling agents can result in production of polymers containing terminally reactive groups or insufficient coupling. In some embodiments, one equivalent of tin coupling agent per equivalent of lithium can provide maximum branching. For instance, if a mixture of tin tetrahalide and silicon tetrahalide is used as the coupling agent, one mole of the coupling agent would be utilized per four moles of live lithium ends. In other instances, where a mixture of tin trihalide and silicon trihalide is used as the coupling agent, one mole of the coupling agent will optimally be utilized for every three moles of live lithium ends. The coupling agent can be added in a hydrocarbon solution, e.g., in cyclohexane, to the polymerization admixture in the reactor with suitable mixing for distribution and reaction.

In some embodiments, after the coupling has been completed, a tertiary chelating alkyl 1,2-ethylene diamine or a metal salt of a cyclic alcohol can be added, and in some instances this can stabilize the coupled polymer. Some examples of tertiary chelating amines that can be used include chelating alkyl diamines of the structural formula: 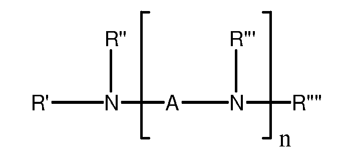 wherein n represents an integer from 1 to 6, wherein A represents an alkylene group containing from 1 to 6 carbon atoms and wherein R', R", R'" and R"" can be the same or different and represent alkyl groups containing from 1 to 6 carbon atoms. The alkylene group A can be of the formula (CH₂)ₘ wherein m is an integer from 1 to 6.

In some embodiments, the amount of chelating alkyl 1,2-ethylene diamine or metal salt of the cyclic alcohol that can be added can be at least 0.01 phr (parts by weight per 100 parts by weight of dry rubber), at least 0.05 phr, at least 0.1 phr, no more than 0.6 phr, no more than 1 phr, or no more than 2 phr. In some embodiments, the amount of chelating alkyl 1,2-ethylene diamine or metal salt of the cyclic alcohol added to the polymer cement can stabilize the polymer.

Together with the terminating compound of formula I, the terminating agents can be used to stop the polymerization and to "terminate" the living polymer. Terminating agents include tin monohalides, silicon monohalides, N,N,N',N'-tetradialkyldiamino-benzophenones (e.g., tetramethyldiaminobenzophenone and the like), N,N-dialkylamino-benzaldehydes (e.g., dimethylaminobenzaldehyde and the like), 1,3-dialkyl-2-imidazolidinones (e.g., 1,3-dimethyl-2-imidazolidinone and the like), 1-alkyl substituted pyrrolidinones; 1-aryl substituted pyrrolidinones, dialkyl- dicycloalkyl-carbodiimides containing at least 5 carbon atoms or nor more than 20 carbon atoms, and dicycloalkyl-carbodiimides containing at least 5 carbon atoms or nor more than 20 carbon atoms.

After the termination step, and optionally a stabilization step, has been completed, the polymer can be recovered from the organic solvent. The coupled polymer can be recovered from the organic solvent and residue by means such as chemical (e.g., alcohol) coagulation, thermal desolventization, steam stripping, or other suitable method. For instance, the polymer can be precipitated from the organic solvent by the addition to the polymer solution of lower alcohols containing from 1, 2, 3, or 4 carbon atoms. Examples, of lower alcohols that can be used for precipitation of the polymer include but are not limited to methanol, ethanol, isopropyl alcohol, normal-propyl alcohol, and t-butyl alcohol. The utilization of lower alcohols to precipitate the polymer can also "terminate" any remaining living polymer by inactivating lithium end groups.

After the coupled polymer is recovered from the solution, steam-stripping can be employed to reduce the level of volatile organic compounds in the coupled polymer. Additionally, the organic solvent can be removed from the polymer by drum drying, extruder drying, vacuum drying, and the like.

One example of a steam stripping procedure follows. Polymer/hydrocarbon solutions are fed from storage tanks or polymerization reactors to a steam stripper, which in one example can be a nominal 500-gallon steam sparged, agitated vessel. Two axial flow turbines turning at 210 rpm provided agitation in the stripper. Polymer/hydrocarbon solution is pumped through a nozzle entering the bottom of the stripper. Steam is injected through two other nozzles entering the bottom of the stripper. Steam and recycle water rates are variable as they are used to control temperature and stripper level, respectively. Surfactant is used in the stripper to help control polymer crumb size formation. From the stripper, crumb water slurry is dumped on a horizontal shaker screen to remove the bulk of the free water. On the shaker screen, crumb slurries of 1-2% by polymer weight are routinely concentrated to 50-60% polymer. This material is fed directly to an Anderson 6D expeller, which is equipped with a variable frequency drive motor. Polymer exiting the expeller is then fed directly into an Anderson 4.5-inch expander for final drying. From the expander, polymer crumb is shaker conveyed to a spiral conveyor to promote additional cooling. From the spiral conveyor, the dry polymer is dropped to collection bins, weighed, and baled. In place of a mechanical expander dryer conventional forced air oven or conveyer driers can be used.

The polymers of the present invention can be used alone or in combination with other polymers to prepare rubber compositions. These rubber compositions can provide tire treadstock, sidewall stock, or other tire component stock compounds. In some embodiments, at least one such component of a tire can be produced from these rubber compositions. For example, the inventive polymer (e.g., made by a process described herein) can be blended with any conventionally employed treadstock rubber including but not limited to natural rubber, synthetic rubber, and blends thereof. Other examples of such rubbers include synthetic polyisoprene rubber, styrene/butadiene rubber (SBR), polybutadiene, butyl rubber, Neoprene, ethylene/propylene rubber, ethylene/propylene/diene rubber (EPDM), acrylonitrile/butadiene rubber (NBR), silicone rubber, the fluoroelastomers, ethylene acrylic rubber, ethylene vinyl acetate copolymer (EVA), epichlorohydrin rubbers, chlorinated polyethylene rubbers, chlorosulfonated polyethylene rubbers, hydrogenated nitrile rubber and tetrafluoroethylene/propylene rubber.

When the inventive polymers are blended with conventional rubber polymers, the amounts can be at least 10 percent by weight or no more than 99 percent by weight. In some embodiments, tires made with the inventive polymers that are synthesized utilizing the technique described herein can exhibit a decreased rolling resistance, an increased tread life, or both. Benefits can be realized in cases where the tire tread compound is made with the inventive polymer synthesized utilizing the technique described herein.

Rubber compositions can be comprised of polymer and filler. In some embodiments, the rubber compositions can include vulcanizing agents, process oils, vulcanizing accelerators, and other additives.

Examples of the conventional rubbery polymer include natural rubber and diene-based synthetic rubbers. Examples of the diene-based synthetic rubbers include emulsion styrene/butadiene copolymers, solution styrene/butadiene copolymers, 1,4-cis-polybutadiene, 1,2-vinyl-polybutadiene, 1,4-cis-polyisoprene, 3,4-polyisoprene, styrene/isoprene/butadiene copolymers, isoprene/butadiene copolymers, styrene/isoprene copolymers, butyl rubber, ethylene/propylene copolymers, and blends thereof.

The rubber composition, which includes from 25% to 100% by weight polymer (with from 50% to 75% weight percent being one embodiment) also can include fillers. In some instances, these fillers can be rubber reinforcing fillers. The filler can be silica, carbon black, or a combination of a silica and a carbon black. Clay and/or organic fillers such as starch can also be used as fillers.

The silica can be a synthetic amorphous rubber reinforcing silica. Examples include wet-process silica (precipitated silica), dry-process silica (fumed silica), calcium silicate, and aluminum silicate. In one example, the silica is precipitated silica.

The inventive polymers described herein can be coupled with silica, carbon black, or both.

The inventive polymers described herein can be compounded with carbon black in amounts of at least 5 phr (parts by weight per 100 parts by weight of rubber), at least 40 phr, no more than 70 phr, no more than 80 phr, or no more than 100 phr. The carbon blacks may include any of the commonly available, commercially produced carbon blacks. In some embodiments, carbon blacks can include those having a surface area (EMSA) of at least about 20 m²/g, at least about 35 m²/g, no more than about 200 m²/g, or surface areas higher than 200 m²/g. Surface area values used in this application are determined by ASTM test D-1765 using the cetyltrimethyl-ammonium bromide (CTAB) technique. Examples of carbon blacks can include furnace black, channel blacks, lamp blacks, super abrasion furnace (SAF) blacks, high abrasion furnace (HAF) blacks, fast extrusion furnace (FEF) blacks, fine furnace (FF) blacks, intermediate super abrasion furnace (ISAF) blacks, semi-reinforcing furnace (SRF) blacks, medium processing channel blacks, hard processing channel blacks, conducting channel blacks, and acetylene blacks. Mixtures of two or more of the above blacks can be used in preparing the carbon black products of the invention. Values for surface areas of some carbon blacks are summarized in the following table.

| **Carbon Black** | |
|---|---|
| **ASTM Designation (D-1765-82a)** | **Surface Area (D-3765)** |
| N-110 | 126 m² /g |
| N-220 | 111 m² /g |
| N-330 | 93 m² /g |
| N-339 | 95 m² /g |
| N-550 | 42 m² /g |
| N-660 | 35 m² /g |

The carbon blacks utilized in the preparation of rubber compounds can be in pelletized form or an unpelletized flocculent mass. In some instances, unpelletized carbon black can provide more uniformed mixing. The reinforced rubber compounds can be cured in a conventional manner with at least 0.5 phr of known vulcanizing agents or no more than 4 phr of known vulcanizing agents. For example, sulfur or peroxide-based curing systems may be employed. For a general disclosure of some vulcanizing agents one can refer to Kirk-Othmer, Encyclopedia of Chemical Technology, 3rd ed., Wiley Interscience, N.Y. 1982, Vol. 20, pp. 365-468, particularly "Vulcanization Agents and Auxiliary Materials" pp. 390-402. Vulcanizing agents can be used alone or in combination. Vulcanizable elastomeric or rubber compositions can be prepared by compounding or mixing the polymers thereof with carbon black and other rubber additives such as fillers, plasticizers, antioxidants, curing agents and the like, using rubber mixing equipment and procedures.

When synthetic amorphous silica (e.g. precipitated silica) is used as filler in the rubber composition, a silica coupling agent can be used to further increase the reinforcing property at the time when the silica is incorporated. Such silica coupling agents have a moiety reactive with hydroxyl groups (e.g. silanol groups), on the silica filler and another different moiety interactive with the conjugated diene derived elastomer. Examples include organoalkoxymercapto silanes and bis(3-trialkoxysilylalkyl) polysulfides having an average of 2 to 4 connecting sulfur atoms in its polysulfidic bridge. Examples of the silica coupling agent comprise, for example, bis(3-triethoxysilylpropyl) tetrasulfide, bis(3-triethoxysilylpropyl) disulfide, bis(2-triethoxysilylethyl) tetrasulfide, bis(3-trimethoxysilylpropyl) tetrasulfide, bis(2-trimeth-oxysilylethyl) tetrasulfide, 3-mercaptopropyltrimethoxysilane, 3-mercaptopropyl-triethoxysilane, 2-mercaptoethyltrimethoxysilane, 2-mercaptoethyltriethoxysilane, 3-nitropropyltrimethoxysilane, 3-nitropropyl-triethoxysilane, 3-chloropropyltrimethoxysilane, 3-chloropropyltriethoxysilane, 2-chloroethyltrimethoxy-silane, 2-chloroethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxy-silylethyl-N,N-dimethylthiocarbamoyl tetrasulfide, 3-trimethoxysilylpropylbenzothiazole tetrasulfide, 3-triethoxysilylpropylbenzothiazole tetrasulfide, 3-triethoxysilylpropyl-methacylate monosulfide, 3-trimethoxysilylpropylmethacylate monosulfide, bis(3-diethoxy-methylsilylpropyl) tetrasulfide, 3-mercaptopropyldimethoxymethylsilane, 3-nitropropyl-dimethoxymethylsilane, 3-chloropropyldimethoxymethylsilane, dimethoxymethylsilylpropyl-N,N-dimethyl-thiocarbamoyl tetrasulfide, and dimethoxymethylsilylpropylbenzothiazole tetrasulfide.

The amount of silica coupling agent can be, for example, in a range of from 1 to 20 weight percent based on the amount of the silica. In some embodiments, the amount of silica coupling agent can be, for example, in a range of from 5 to 15 weight percent based on the amount of the silica.

Examples of vulcanizing agents include sulfur and sulfur containing compounds. The amount of the vulcanizing agent to be used may be for example from 0.1 to 10.0 phr. For example, the amount may be from 1.0 to 5.0 phr.

Examples of the process oil include for example paraffin-based oils, naphthene-based oils, and aromatic-based oils. The amount to be used of the process oil may be, for example from 0 to 100 phr.

The vulcanization accelerators may include for example thiazole-based ones, such as 2-mercaptobenzothiazole, dibenzothiazyl disulfide, and sulphenamides such as for example N-cyclohexyl-2-benzothiazyl sulphenamide, and guanidine-based ones such as for example diphenylguanidine. The amount to be used of the vulcanization accelerator may be, for example, from 0.1 to 5.0 phr or from 0.2 to 3.0 phr.

The rubber composition of the present invention may also typically contain additives that are conventionally used in rubber industries, for example, are antioxidants, zinc oxide, stearic acid, waxes and antidegradients.

The rubber composition may be obtained by milling the ingredients using a kneading apparatus such as a roll mill, an internal mixer, and the like. After being shaped, the rubber composition can be vulcanized. The rubber composition can be used in various tire components, such as tire treads, under treads, carcasses, side walls, and beads, and in other industrial applications such as rubber cushions, belts, and hoses, for example. In one example, the rubber composition is suitable as a rubber composition for tire treads.

This invention is illustrated by the following examples. Unless specifically indicated otherwise, parts and percentages are given by weight.

### Examples

### Example 1

### Preparation of functional co-monomer Pyrrolidinoethylstyrene (PES):

The following equation shows the overall reaction for making PES.

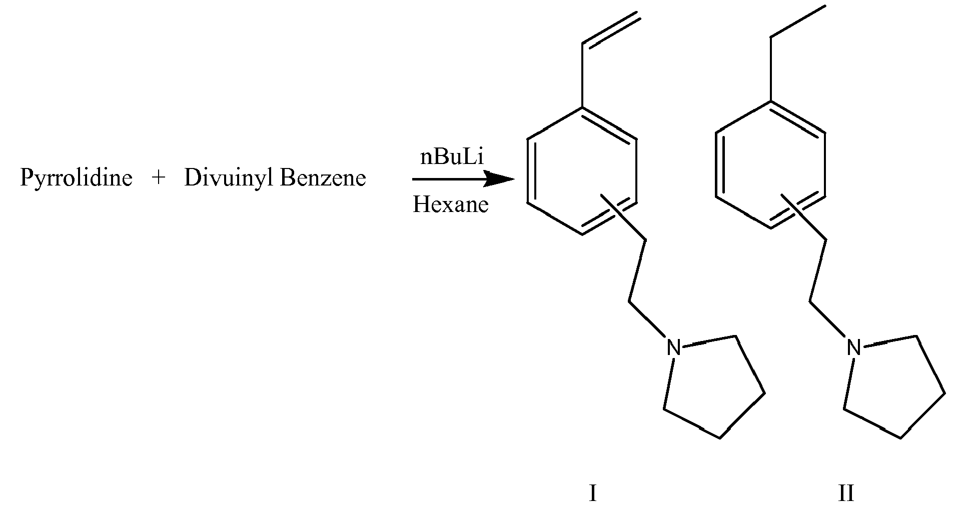

The desired products are a mixture of 3- and 4- (2-pyrrolidinoethyl) styrene (I) while the minor by-products are a mixture of 3- and 4-(2-pyrrolidinoethyl)-1-ethyl benzene (II) that is formed from the impurity in divinyl benzene (DVB).

Equipment: 11 reactor capable of operating around 0°C, Distillation setup capable of achieving 150°C and 5 mm-Hg or better vacuum, GC for purity determination - HP 5890A or equivalent

**Recipe:**

| **Reaction** | **Parts** | **Weight** | **Volume** |
|---|---|---|---|
| Solvent **hexane** | 356.6312 | 310.79 g | 471.60 ml |
| N **Pyrrolidine** | 100.0000 | 85.00 g | 99.77 ml |
| Vinyl **80% DVB** | 228.8210 | 194.50 g | 0.06 gal |
| Li **n-BuLi** 1.60M | 13.1898 | 11.21 g | 16.60 ml |
| **Density 0.751 g/ml Total** | 694.4522 | 601.54 g | 800.77 ml |
| **Termination Isopropanol** | 2.8168 | 2.2943 g | 3.0501 ml |
| **Stabilization Prostab 5415** 5000ppm | 3.5385 | 3.0077 g | N/A |

| **Stabilization** | **Modifier/Li** | **N/vinyl** | **N/Li** | **Actives** | **SS/Li** |
|---|---|---|---|---|---|
| **5000 ppm** | **0.00** | **1.00** | **45.00** | **40.00%** | **1.50** |

Impurities such as water and t-butylcatechol (tBC) were removed from the starting materials since they can react with n-BuLi. Pyrrolidine and hexane are dried over 3A molecular sieves and DVB is dried over alumina. Prostab® 5415 is bis(1-oxyl-2,2,6,6- tetramethylpiperidine-4-yl)sebacate.

### Synthetic and Purification Procedures. Reaction:

Hexane, pyrrolidine, and DVB were transferred into the reactor. The contents were cooled down to 5°C or lower. nBuLi was added slowly to maintain the temperature within the range of 0°C to 5°C. If the temperature exceeded the range, addition of nBuLi was suspended until the temperature returned to normal. The solution had a fairly intense green color during the reaction but turned brownish red at the end. The progress of the reaction was monitor by taking GC samples. 80% to 85% conversion indicated an approach to the end of the reaction. At the end of the reaction, the active Li was terminated by injecting isopropanol. Prostab 5415 was used as a stabilizer to prevent polymerization.

### Purification

The Prostab stabilizer prevented rapid polymerization from taking place during distillation, which could yield little or no desired product. The mixture was transferred into a round bottom flask along with boiling chips. Pressure was decreased slowly using a vacuum pump to achieve a vacuum of about 1-2 mm Hg. Ambient temperature was maintained to remove hexane and pyrrolidine. When the boiling stopped, the temperature was raised to 60°C - 90°C to remove unreacted DVB. Boiling likely stopped when all of the unreacted DVB was removed because the main product will boil at about 120°C.

The retention times for the target materials using the above method were
3-(2-pyrrolidinoethyl) styrene = 24.473 minutes
4-(2-pyrrolidinoethyl) styrene = 25.370 minutes

The retention times for the impurities, reaction products of the pyrrolidine with 3 & 4 ethyl benzene were
3-(2-pyrrolidinoethyl)-1-ethyl benzene = 22.922 minutes
4-(2-pyrrolidinoethyl)-1-ethyl benzene = 23.640 minutes

### Example 2

### Preparation of control polymer:

Polymerizations were carried out in a twenty seven gallon batch reactor under moderate stirring and inert nitrogen atmosphere. The reactor was equipped with a variable speed agitator with 2 AFTs (axial flow turbine). Heating and cooling to control the reactor temperature was accomplished with a reactor jacket circulating gycol. The glycol was heated with steam when needed. Prior to polymerization, the reactor was filled with dry hexane and quenched with n-BuLi to minimize the scavenger level. Premix consisting of a dilute solution of 25/75 wt/wt styrene/butadiene in hexane was dried over a silica gel bed and held in a hold vessel until needed. A weighed amount of this dried monomer premix was transferred into the reactor. The reactor was heated to a set point 150°F; the modifier TMEDA (tetramethylelthylenediamine) was pressured into the reactor. After it mixed in, n-BuLi initiator was pressured into the reactor. The reaction was then allowed to run its course and conversion data was determined gravimetrically or by gas chromatography (GC) analysis of residual monomer. Polymerizations were terminated after full conversion was reached by treating with isopropanol. The target polymer Mooney Viscosity was 40 with a glass transition temperature of approximately -25ºC. Prior to polymer finishing via steam stripping, 0.5 phr Polystay K antioxidant was added as antioxidant.

### Example 3

### Preparation of TEOS terminated polymers:

TEOS terminated polymers were prepared as described in Example 2 with the exception that isopropanol termination was replaced with the addition of 1 molar equivalent of TEOS per mole of butyl-lithium used to initiate the polymerization. Base Mooney viscosity prior to the termination was approximately 40 for all polymers and Tg was -25ºC.

### Example 4

### Preparation of TEOS terminated polymers with PES monomers:

TEOS terminated polymers with PES monomers were prepared as described in Example 3 with the exception that 0.25 wt% PES co-monomer was added to the styrene/butadiene premix prior to initiation. Base Mooney viscosity prior to the termination was approximately 40 for all polymers and Tg was -25ºC.

### Example 5

### Rolling resistance and treadwear for TEOS terminated polymers with PES monomers (PES-TEOS) and for TEOS terminated polymers without PES monomers (TEOS).

Three polymer types were prepared as described in Example 2 (control polymer), Example 3 (TEOS polymer) and Example 4 (PES-TEOS polymer).

Table 1 shows the characterization of the 3 polymers

**Table 1: Polymer Characterization**

| **Polymer** | **Control (a)** | **TEOS (b)** | **PES-TEOS (c)** |
|---|---|---|---|
| ML(1+4) 100 C | 40 | 61 | 69 |
| Tg (midpt) C | -28.0 | -26.8 | -27.2 |
| % Styrene | 24.8 | 25.0 | 25.0 |
| % Vinyl | 40.2 | 38.3 | 37.4 |

The polymers were tested for performance in a silica compound utilizing 65 phr of Silica, 70 phr of the experimental polymer, and 30 phr of polybutadiene. Compounds were mixed in a 300 cc Brabender mixer in 3 stages, which consisted of two non-productive stages and one productive stage.

| Stage | Ingredient | phr |
|---|---|---|
| NP1 | Tested Polymer | 70 |
| NP1 | Polybutadiene | 30 |
| NP1 | Silica | 65 |
| NP1 | Siloxy Coupling Agent* | 10.4 |
| NP1 | Naphthenic oil | 20 |
| NP1 | ZnO | 3.5 |
| NP1 | Stearic Acid | 2 |
| NP1 | Diamine AO | 2.2 |
| NP1 | Paraffin Wax | 1.5 |
| NP2 | re-mill | |
| PR | Sulfur | 1.7 |
| | Quanidine/sulfonamide | |
| PR | Accelerators | 3.1 |
| PR | Diamine AO | 0.75 |

| | | |
|---|---|---|
| *50 wt% active absorbed on black | | |

Rotor speed was adjusted to maintain a constant drop temperature for each compound. Performance indicators include: Uncured G' @ 100C Lab (an indicator of filler/polymer interaction), room temperature (RT) rebound (ASTM D1054), tan δ measurements at 30ºC, 5% strain and 10 Hz to reflect Rolling Resistance (RR) (ASTM D5992), and DIN Abrasion measurements (ASTM D5963) to indicate treadwear. The results are shown in Table 2.

**Table 2: Lab Results for Rolling Resistance and Treadwear Indicators**

| **Example** | **Polymer Description** | **Uncured G' (0.83 Hz)** | **RT Rebound** | **RR- Tanδ 5% 30C** | **Treadwear -DIN Abrasion** |
|---|---|---|---|---|---|
| 5a | control | 127 | 41.6 | 0.24 | 139 |
| 5b | TEOS | 197 | 48.5 | 0.16 | 123 |
| 5c | PES-TEOS | ***304*** | ***50.6*** | ***0.15*** | ***111*** |
| performance direction | | higher is better | higher is better | lower is better | lower is better |

The example 5a control polymer shows the base line performance for this class of polymer. Example 5b shows that TEOS provides improvement compared to the control polymer but does not provide properties that are as good as PES-TEOS. Example 5c, the best of the three, shows an increase in polymer/filler interaction, an increase in RT Rebound, and a reduction in tan δ. These are indicative of lower rolling resistance for a tire having a tread of such composition and, therefore, better fuel economy for an associated vehicle. Table 2 also shows a significant decrease in DIN Abrasion when using the combination of PES as a co-monomer with TEOS termination. This improvement in abrasion resistance will manifest itself as better resistance to wear rates of a tire tread.

### Example 6

Tires were prepared with treads of rubber composition corresponding to the three polymer types and compound formulation used in Example 5. Tires were rated for rolling resistance as well as treadwear rates after 12,000 miles. Test information for the respective tires is represented in Table 3 with values normalized to the value of 100 assigned to the respective properties of the Control Tire 6a using the control polymer. Rolling resistance (RR) is represented as a relative rating compared to an assigned value of 100 for the control tire. For the reported results, the higher value equates to lower resistance to rolling and, therefore, is more desirable. Treadwear is measured as an average reduction in tread depth as measured from top of the tread grooves taken across the width of the tread; a higher value indicates less tread was lost and, therefore, represents less wear of the tread, which is better.

**Table 3: Tire Results for Rolling Resistance and Treadwear**

| **Example** | **Polymer Description** | **Normalized RR** | **Normalized Treadwear Rates** |
|---|---|---|---|
| 6a | control | 100 | 100 |
| 6b | TEOS | 103 | 112 |
| 6c | PES-TEOS | ***108*** | ***118*** |
| performance direction | | higher is better | higher is better |

The example 6a control polymer shows the base line performance of a tire results for this class of polymer. Example 6b shows that TEOS termination alone only improved RR by 3% and wear rates by 12%. Example 6c shows that the combination of PES co-monomer with TEOS termination improved tire tread RR by 8% and also improved wear rates by 18%.

Thus, the addition of a polymer with PES co-monomer and TEOS termination to the tire tread rubber composition significantly improved the treadwear (e.g., reduces the wear of the tread) as well as resistance to rolling which is predictive of better fuel economy.

### Example 7

### Rolling resistance and treadwear for PES functionalized polymers without TEOS termination.

Three polymers were prepared as described in Example 2 with the exception that a continuous polymerization process was utilized and that 0.5 wt% PES co-monomer was added to the styrene/butadiene premix prior to initiation. Example 7a is control polymer with no functionalization, Example 7b contains 0.5 wt% PES at 45 Mooney viscosity and Example 7c contains 0.5 wt% PES at 73 Mooney viscosity.
Table 4 shows the characterization of the 3 polymers

**Table 4**

| **Polymer** | **Control (7a)** | **PES (LM) (7b)** | **PES (HM) (7c)** |
|---|---|---|---|
| ML(1+4) 100 C | 73 | 45 | 73 |
| Tg (midpt) C | -24.0 | -24.0 | -26.0 |
| % Styrene | 26.0 | 27.0 | 25.0 |
| % Vinyl | 42.0 | 37.0 | 38.0 |

The polymers were tested for performance in a silica compound as described in Example 5. Performance indicators include: Uncured G' @ 100C Lab indicator filler/polymer interaction, room temperature (RT) rebound (ASTM D1054), and tan δ measurements at 30ºC, 5% strain and 10Hz to reflect Rolling Resistance (RR) (ASTM D5992). The results are shown in Table 5

**Table 5 Lab Results for Rolling Resistance**

| **Example** | **Polymer Description** | **Uncured G' (0.83Hz)** | **RT Rebound** | **RR- Tan δ 5% 30°C** |
|---|---|---|---|---|
| 7a | control | 268 | 36 | 0.24 |
| 7b | PES (LM) | 314 | 46 | 0.16 |
| 7c | PES (HM) | 360 | 49 | 0.15 |
| performance direction | | high better | high better | lower better |

The example 7a control polymer shows the base line performance for this class of SBR polymer. Examples 7b and 7c show that polymers with PES co-monomer can provide an increase in polymer/filler interaction, reduction in tan δ, and increase in Rebound. This is indicative of lower rolling resistance for a tire having a tread of such composition and, therefore, better fuel economy for an associated vehicle.

Tires were prepared with treads of rubber composition containing the above polymers according to Example 6. Tire were tested and rated for treadwear rates after 12,000 miles. Test information for the respective tires is represented in Table 6 with values normalized to the value of 100 assigned to the respective properties of the Control Tire 7a using the non-functional control polymer. Calculated Rolling resistance (RR) is represented as a relative rating compared to an assigned value of 100 for the control tire. For the reported results, higher values equate to lower resistance to rolling and, therefore, are more desirable. Treadwear is measured as an average reduction in tread depth as measured from top of the tread grooves taken across the width of the tread. A higher value indicates less tread was lost and, therefore, represents less wear of the tread, which is better.

**Table 6. Tire Results for Roilling Resistance and Treadwear**

| **Example** | **Polymer Description** | **Normalized RR** | **Normalized Treadwear Rates** |
|---|---|---|---|
| 7a | control | 100 | 100 |
| 7b | PES (LM) | 109 | 101 |
| 7c | PES (HM) | 110 | 103 |
| performance direction | | high better | high better |

The example 7a control polymer shows the base line performance of a tire tread for this class of SBR polymer. Examples 7b and 7c show that polymer with PES co-monomer can improve the rolling resistance of the tire and, to a lesser extent, can improve treadwear. Two different Mooney viscosities, high and low, were tested and both show minimal impact on treadwear.

Comparison of Table 3 and Table 6 shows that adding a polymer with both PES co-monomer and TEOS termination to the tire tread rubber composition can improve both the treadwear (reduce the wear of the tread) and the resistance to rolling, which is predictive of better fuel economy for a tire.

## Claims

1. A polymer comprising
(a) a terminating group provided from a compound
XₙSi(OR)ₘR'₄₋ₘ₋ₙ
wherein X is a chlorine atom, a bromine atom or an iodine atom, R is an alkyl group with from 1 carbon to 7 carbons, R' is a alkyl group with from 1 carbon to 20 carbons, an aryl group, a vinyl group or a halogenated alkyl group, m is an integer from 1 to 4, n is an integer from 0 to 2, and a sum of n and m is from 1 to 4;
(b) repeat units comprising:
(1) a repeat unit provided from a conjugated diolefin monomer, and
(2) a repeat unit provided from an amine monomer.

2. The polymer of claim 1, wherein the amine monomer is an amine styrene monomer.

3. The polymer of claim 2, wherein the amine styrene monomer has a formula selected from the group consisting of 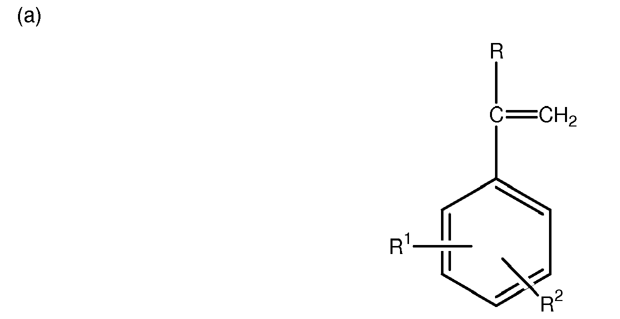 wherein R is an alkyl group with from 1 carbon atom to 10 carbon atoms or a hydrogen atom; R¹ and R² can be the same or different and is hydrogen or an amine functional group; R¹ and R² are not both hydrogen atoms; and R¹ and R² is a moiety selected from: 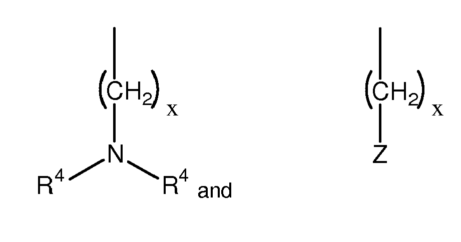 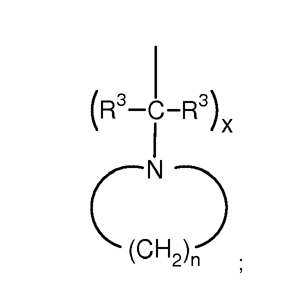 wherein the R³ within the repeat units and in different repeat units can be the same or different and is hydrogens or alkyl groups with from 1 carbon atom to 4 carbon atoms; n is from 1 to 10; x is from 1 to 10; R⁴ can be the same or different and is selected from the group consisting of alkyl groups with from 1 to 10 carbon atoms, aryl groups, allyl groups, and alklyoxy groups having the structural formula -(CH₂)_{y}-O-(CH₂)_{z}CH₃, wherein y is an integer from 1 to 10 and z is an integer from 1 to 10; and Z is a nitrogen-containing heterocyclic compound; 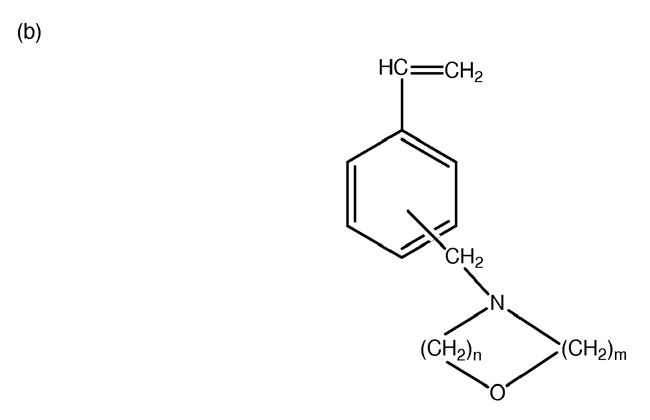 wherein n is an integer from 1 to 10 and m is an integer from 1 to 10; 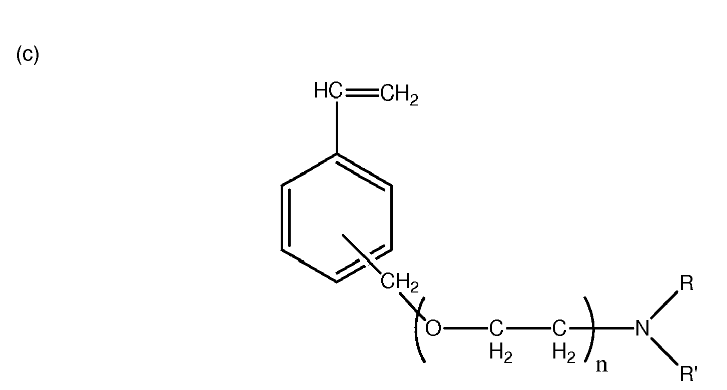 wherein n is an integer from 1 to 10, and R and R' can be the same or different and are alkyl groups with from 1 carbon atom to 10 carbon atoms; 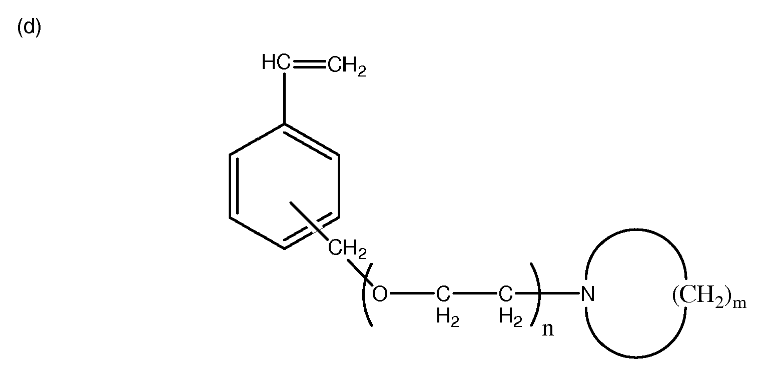 wherein n is an integer from 1 to 10 and m is an integer from 4 to 10; 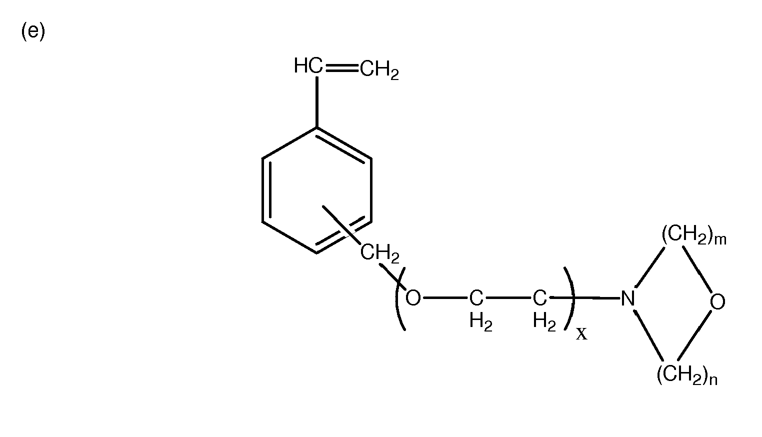 wherein x is an integer from 1 to 10, n is an integer from 1 to 10 and m is an integer from 1 to 10; 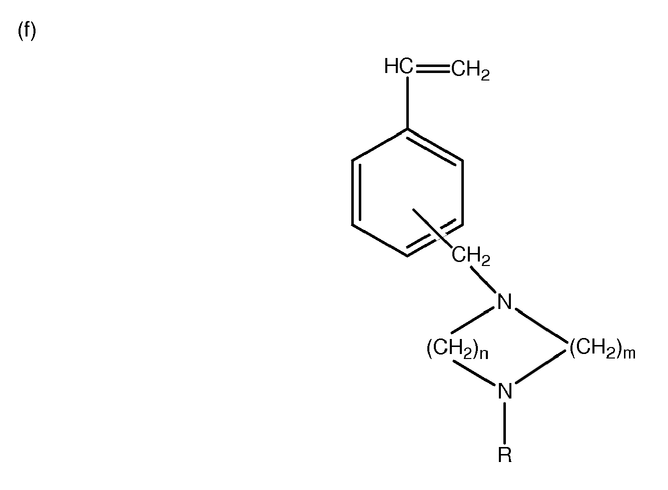 wherein R is a hydrogen atom or an alkyl group with from 1 carbon atom to 10 carbon atoms; n is an integer from 1 to 10; m is an integer from 1 to 10; and 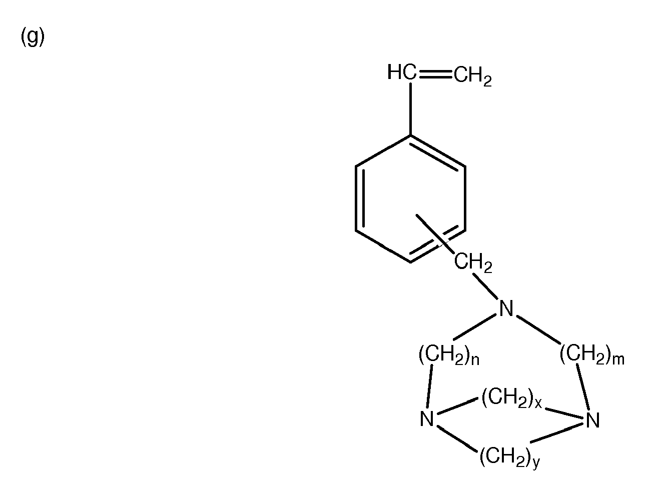 wherein n is an integer from 1 to 10, m is an integer from 1 to 10, x is an integer from 1 to 10, and y is an integer from 1 to 10.

4. The polymer of at least one of the previous claims, wherein the amine monomer is 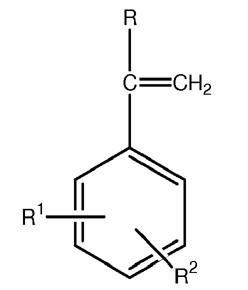 wherein R is an alkyl group with from 1 carbon atom to 10 carbon atoms or a hydrogen atom; R¹ and R² are not both hydrogen atoms, and R¹ and R² are moieties selected from the formula: 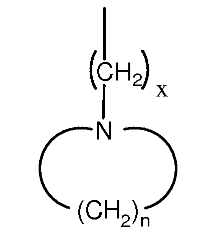 where n is from 1 to 10 and x is from 1 to 10; or wherein the amine monomer is: 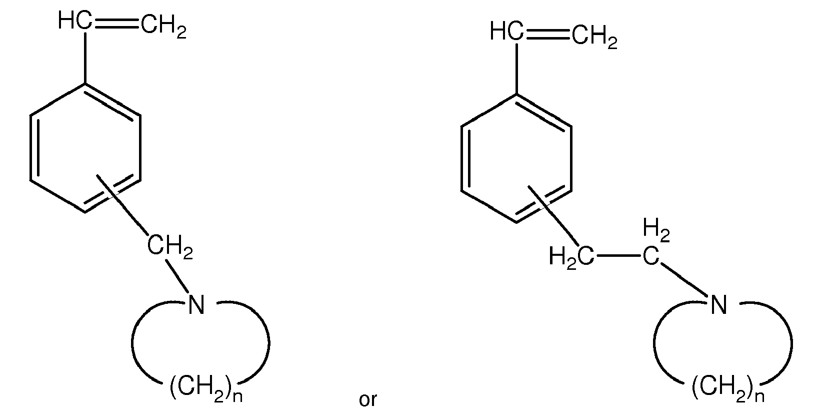 wherein n is an integer from 4 to 10.

5. The polymer of claim 3, wherein the nitrogen-containing heterocyclic group (Z group) mentioned in formula (a) is selected from the group consisting of: 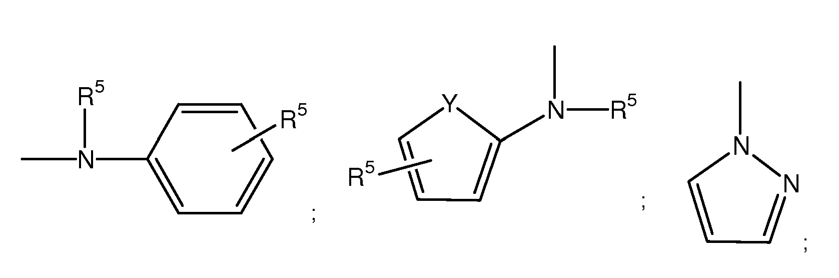 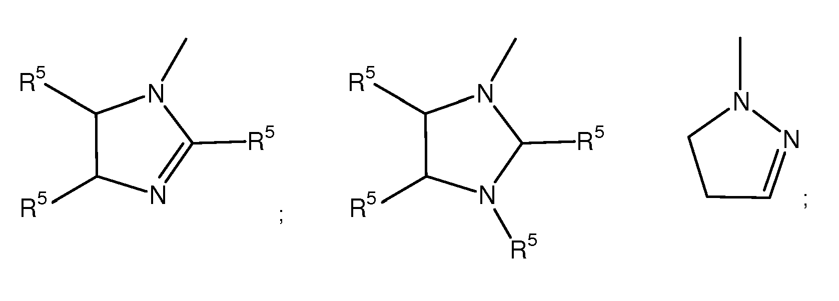 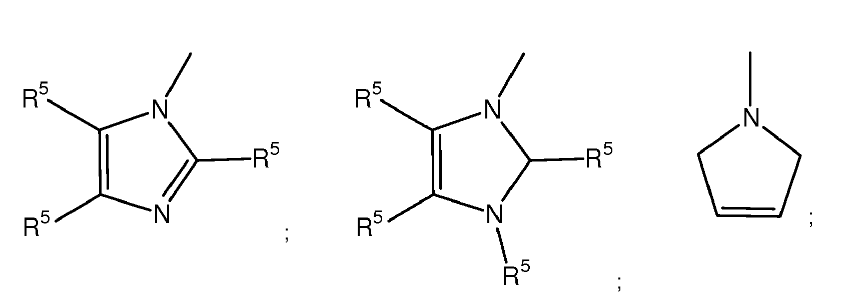 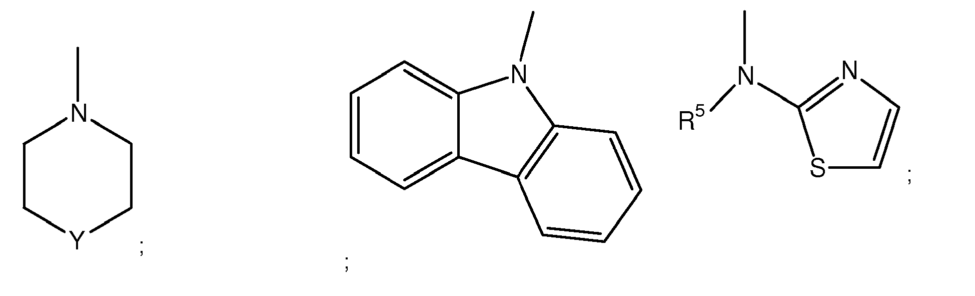 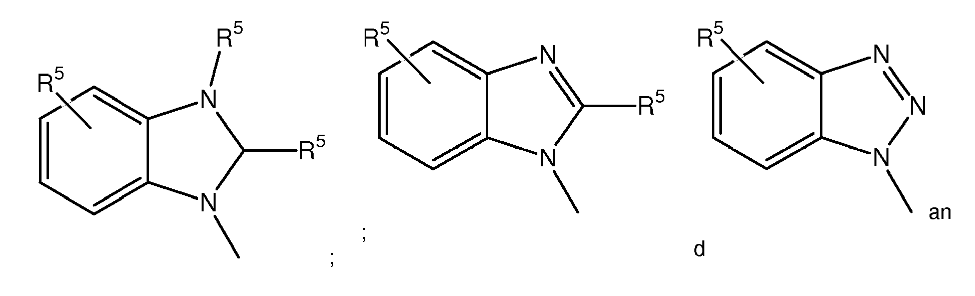 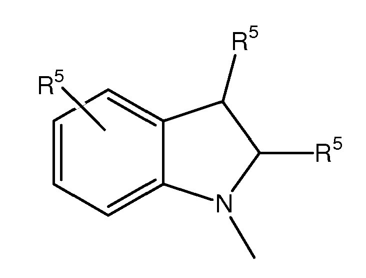 wherein R⁵ groups can be the same or different and is selected from the group consisting of alkyl groups with from 1 carbon atom to 10 carbon atoms, aryl groups, allyl groups, and alkoxy groups; and Y is oxygen, sulfur, or a methylene group.

6. The polymer of at least one of the previous claims wherein the amine monomer is

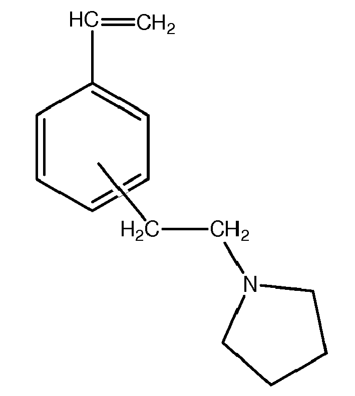

7. The polymer of claim 1, wherein the at least one compound is hydrolysable and/or wherein the at least one compound is Si(OCH₂CH₃)₄.

8. The polymer of at least one of the previous claims, wherein R is an alkyl group having 1 to 3 carbon atoms.

9. A method for preparing a polymer, the method comprising
(1) polymerizing monomers comprising:
(a) at least one conjugated diolefin monomer, and
(b) at least one amine monomer; and
(2) reacting the polymerized monomers with a terminating compound to provide a terminating group on the polymer, wherein the terminating compound is selected from
XₙSi(OR)ₘR'₄₋ₘ₋ₙ
wherein X is a chlorine atom, a bromine atom or an iodine atom, R is H or an alkyl group with from 1 carbon to 7 carbons, R' is a alkyl group with from 1 carbon to 20 carbons, an aryl group, a vinyl group or a halogenated alkyl group, m is an integer from 1 to 4, n is an integer from 0 to 2, and a sum of n and m is from 1 to 4; and
(3) recovering the polymer.

10. The method of claim 9, wherein the amine monomer is

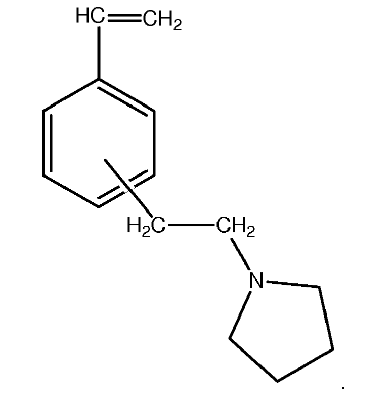

11. The method of claim 9 or 10, wherein the at least one terminating compound is hydrolysable and/or wherein the R of the terminating compound is an alkyl group having from 1 to 3 carbon atoms.

12. The method of claim 9, wherein steam stripping is used to isolate, purify or recover the polymer.

13. A rubber composition comprising:
100 parts by weight of a polymer, wherein from 25% to 100% by weight of the polymer is a polymer of one of the claims 1 to 8; and
from 10 to 130 phr of a filler.

14. The rubber composition of claim 13, wherein the filler comprises silica.

15. A tire comprising the polymer of one of the claim 1 to 8 or the rubber composition claim 13 or 14.
